# EUROPEAN PATENT APPLICATION

(11) **EP 4 851 833 A1**
(43) Date of publication of application: **09.12.2026**
(21) Application number: 26181714.2
(22) Date of filing: 28.05.2026
(51) Int. Cl.: G06F 21/31, G06F 21/32, G06N 20/00, G06V 40/70, H04L 9/32, H04L 9/40

(54) **SECURE ACCESS TO TRAINED ARTIFICIAL INTELLIGENCE**

(30) Priority: 05.06.2025 US 202519229960
(71) Applicant: Microsoft Technology Licensing, LLC, Redmond, WA 98052 (US)
(72) Inventor: GORDON, Michael Cameron, Redmond, Washington, 98052 (US); FINNEY, Benjamin Michael, Redmond, Washington, 98052 (US)
(74) Representative: CMS Cameron McKenna Nabarro Olswang LLP

(57) **Abstract**

A user-authentication and access-selection method (300) comprises receiving (331A) biometric data (114) from a biometric recorder (104), the biometric data including a user biometric (116) and an access-mode selection (118) that distinguishes a requested mode of access to trained artificial intelligence (AI) from among a plurality of modes of access to trained AI; determining (331C), via a cryptographic module (110), whether the user biometric is pre-authorized to unlock the requested mode of access; and unlocking (331D) the requested mode of access if it is determined that the user biometric is pre-authorized to unlock the requested mode of access.

## Description

### BACKGROUND

Multi-component language models trainable on vast corpora of data can be configured for query-and-response functionality and are accessible as web services on the internet-both directly and via search queries from internet browsers. The term 'trained artificial intelligence (AI)' is commonly applied to such models. Access to trained AI is also available via other computer-program products, such as application software (applications or 'apps') as well as web or operating-system (OS) services and application-programming interfaces (APIs). The term 'client agent' can be applied a computer program that provides access to trained AI via a web service.

### SUMMARY

One aspect of this disclosure relates to a user-authentication and access-selection method. The method comprises (a) receiving biometric data from a biometric recorder, the biometric data including a user biometric and an access-mode selection that distinguishes a requested mode of access to trained AI from among a plurality of modes of access to trained AI; (b) determining, via a cryptographic module, whether the user biometric is pre-authorized to unlock the requested mode of access; and (c) unlocking the requested mode of access if it is determined that the user biometric is pre-authorized to unlock the requested mode of access.

Another aspect of this disclosure relates to a user-authentication and access-selection system comprising a biometric recorder, a cryptographic module, and a control module configured to enact the method summarized above.

This Summary is provided to introduce in simplified form a selection of concepts that are further described in the Detailed Description. This Summary is not intended to identify key features or essential features of the claimed subject matter, nor is it intended to be used to limit the scope of the claimed subject matter. The claimed subject matter is not limited to implementations that solve any disadvantages noted in any part of this disclosure.

### BRIEF DESCRIPTION OF THE DRAWINGS

FIG. 1 shows aspects of an example user-authentication and access-selection system.
FIG. 2 shows aspects of an example fingerprint recorder configured to furnish biometric data.
FIG. 3 shows aspects of an example user-authentication and access-selection method.
FIG. 4 shows aspects of an example environment comprising an AI-receiving computer system and a user-authentication and access-selection system integrated into a portable device.
FIG. 5 shows aspects of an example computer system.

### DETAILED DESCRIPTION

As noted above, web services offering query-and-response access to trained AI are accessible via client agents. Parallel client agents may be available for execution on different kinds of user devices-e.g., smartphone, tablet computer, personal computer (PC), wearable computer, or vehicle. Accordingly, a given user may access trained AI via a plurality of client agents on a corresponding plurality of devices. It will be understood that some client agents may access a web service not only for access to trained AI but also for efficient execution of computationally expensive operations-e.g., from user devices having limited computational bandwidth.

A multi-user device, such as a PC, may support a plurality of user profiles associated with the various users thereof, but even a single-user device may support two or more profiles associated with the same user-the user's work profile, personal profile, and/or family profile, for example. Furthermore, for a given user profile and client agent, there can be different categories of trained AI (i.e., knowledge domains) to which the client agent is configured to provide access. Examples include AI related to vehicle navigation, AI related to tax preparation, AI related to drug discovery, etc. Finally, for a given user profile, client agent, and AI category, there can be different levels of access security with which the trained AI is accessed. Examples include a baseline access-security level and an elevated access-security level. For instance, a user from his or her family profile may launch a client agent to query trained AI in the category of tax preparation. For queries that can be answered with no access to personal information-e.g., 'Can I claim my adult child as a dependent?'-the user may prefer a baseline access-security level. For queries that require access to personal information-e.g., 'Should I itemize or take the standard deduction?'-the user may prefer an elevated access-security level. A client agent operating under an elevated access-security level may require more robust user authentication, may enforce a shorter login timeout, etc., relative to a client agent operating under a baseline access-security level.

In this disclosure the terms 'access mode' and 'mode of access' refer to a vector of access to trained AI specific to (a) a device, (b) a user profile, (c) an AI category, and/or (d) an access-security level. It is not necessary in a given access mode for all of the elements (a) through (d) to be specified. In comparing one access mode to another, the access modes are the same if all of the specified elements match and different if at least one of the specified elements does not match.

In principle, it may be possible to configure a client agent to enable a user to switch from one access mode to another via conventional user-input modalities-multiple logins, menu-option selection, etc. As the user's day-to-day device interactions become more heavily reliant on trained AI, however, the conventional user-input modalities are likely to be perceived as increasingly inconvenient or unsatisfactory. That issue may be especially acute in scenarios in which the user must switch between access modes that differ with respect to user profile or access-security level, which typically require different authentication.

The alternative proposed herein is to provide device hardware and software that enable the user to switch with comparative ease from one access mode to another. In particular, the user is provided wherewithal to initiate a biometric scan of a variant that maps to a particular mode of access to trained AI. The data obtained in the biometric scan is used both to authenticate the user and to request the particular mode of access. For example, the same user biometric, such as a fingerprint, could be recorded in a different orientations, all equally suitable for authenticating the user. The orientation information may be used, accordingly, to signal the requested mode of access. Many other examples based at least partly on different biometrics and methods of biometric recording are also envisaged. The result is an efficient, intuitive mechanism for the user to enjoy the combined benefits of secure authentication and access-mode selection for virtually any AI-consumption activity.

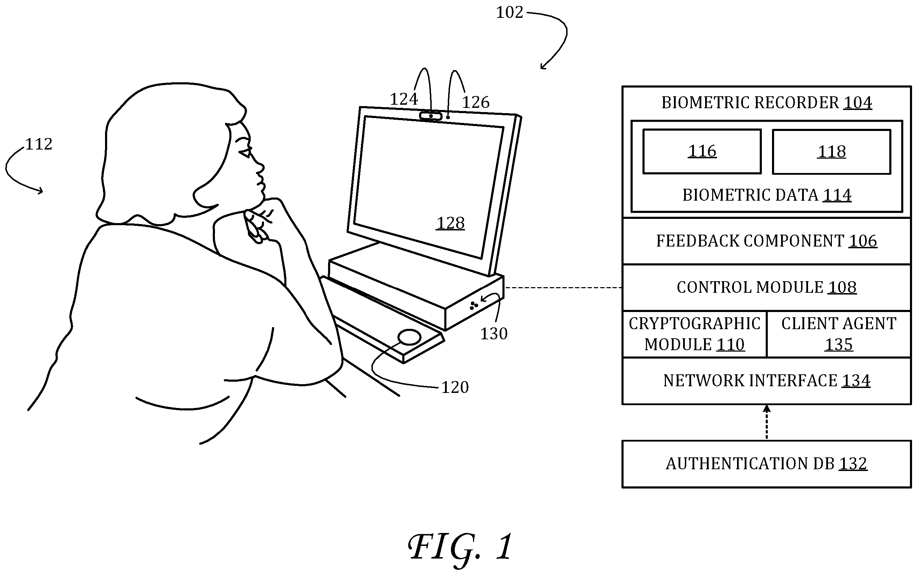

Turning now to the drawings, FIG. 1 shows aspects of an example user-authentication and access-selection system 102. Example system 102 comprises a biometric recorder 104, a feedback component 106, a control module 108, and a cryptographic module 110.

Biometric recorder 104 is an electronic component configured to record one or more biometrics of the user 112 of system 102-i.e., the human being using or attempting to use the system for access to trained AI. The one or more biometrics, when recorded, are encoded in biometric data 114. The biometric data may take various forms, depending on the biometric recorded (*vide infra*)*.* The biometric data may include, for example, one or more digitally encoded images or waveforms.

Biometric data 114 may be separable, via downstream processing, into a 'user biometric' 116 and an 'access-mode selection' 118. The user biometric is the portion of the biometric data that identifies, distinguishes, or otherwise characterizes the user. The access-mode selection is the remainder of the biometric data, which does not influence the characterization of the user, but may represent a request or intent of the user-e.g., a request to consume trained AI according to a particular access mode. By virtue of its separability into user biometric 116 and access-mode selection 118, biometric data 114 provides technical benefits of improved operational efficiency of system 102 and simplified operation by user 112. Further clarified in the examples that follow, these benefits issue from the double purpose served by the biometric data as collected.

In the example illustrated in FIG. 1, biometric recorder 104 comprises a fingerprint recorder 120. Biometric data 114 may comprise, accordingly, one or more fingerprints. In some examples, the fingerprint recorder may comprise a transparent window and digital camera configured to image the transparent window at a very shallow depth of field. Fingerprint-based user authentication and access-mode selection provides the technical benefit of simplified operation of system 102 relative to systems restricted to state-of-the-art input modalities, such as password entry and navigation of a graphical user interface (GUI).

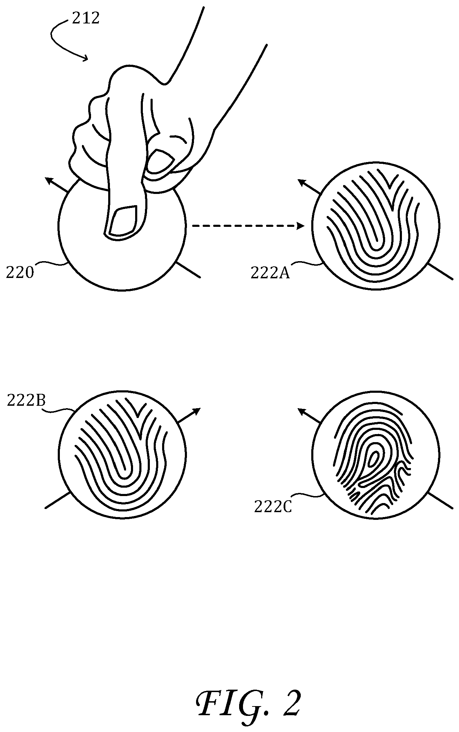

FIG. 2 shows aspects of an example fingerprint recorder 220 configured to furnish biometric data for user 212 in the form of fingerprints 222. A fingerprint of any one of the user's fingers in any orientation, or any combination of the user's fingerprints, could potentially be used to authenticate the user. Accordingly, there can be many degrees of freedom available for recording a fingerprint-based user biometric. The available degrees of freedom include the choice or combination fingers placed on the transparent window and the rotation angle of each fingerprint relative to a pre-determined, standard orientation-e.g., the dashed arrow in the drawing. Degrees of freedom such as these can be used to indicate the requested mode of access to the trained AI. It will be understood that a 'combination of fingers' may be achieved by placing a plurality of fingers on the transparent window concurrently or in succession. In some examples, the concurrent and successive combinations correspond to different access modes.

**Table 1. Non-limiting example mappings of fingerprint-based biometric data to authenticated users for work and personal profiles.**

| hand | finger | work profile | personal profile |
|---|---|---|---|
| | thumb | company expert, planner, navigator | |
| right | thumb + index | role-specific, domain-specific expert with elevated access-security level for company data | |
| | middle | company scientist | |
| | ring | company or role-specific mentor or tutor | |
| | thumb | | generalist, planner, navigator, shopper |
| left | thumb + index | | personal-finance or tax advisor with elevated access-security level to banking data |
| | middle | | scientist or tutor |
| | ring | | companion, friend, or confidant |

Returning now to FIG. 1, biometric recorder 104 in some examples comprises a user-facing camera 124. Accordingly, biometric data 114 may comprise a facial or ocular image. Image-based user authentication and access-mode selection provides the technical benefit of simplified operation of system 102 relative to systems restricted to state-of-the-art input modalities.

As in the examples above, the biometric data 114 from user-facing camera 124 comprises a user biometric 116 suitable for authentication-viz., the image of the user's face or either eye, rotated into a standard orientation-plus additional data reflecting the several degrees of freedom available for collecting the user biometric. The available degrees of freedom include choice of the right or left eye for any ocular image, the state of closure or openness for any facial image, as well as the orientation of any facial or ocular image: any of these degrees of freedom, among others, may be used to indicate access-mode selection 118, the requested mode of access to the trained AI.

**Table 2. Non-limiting example mappings of image-based biometric data to user profiles.**

| imaged feature | personal profile |
|---|---|
| whole face | family |
| right eye | personal |
| left eye | work |

In some examples, biometric recorder 104 comprises a voice recorder including a microphone 126, and biometric data 114 comprises vocalization data, such as speech data. In examples in which the vocalization data includes speech data, the speech data may be unprocessed or processed to any degree. Voiceprint-based user authentication and access-mode selection provides the technical benefit of simplified operation of system 102 relative to systems restricted to state-of-the-art input modalities.

In these examples, user biometric 116 may comprise a phonetic voiceprint recorded while the user is speaking a pre-determined passphrase. The user may have liberty to select from among a plurality of different passphrases. Accordingly, the choice of passphrase may encode the access-mode selection 118 and may be used to indicate the requested mode of access to the trained AI.

**Table 3. Non-limiting example mappings of voiceprint biometric data to AI category and access-security level.**

| passphrase | AI category | access-security level |
|---|---|---|
| 'Drive to ...' | navigation | N/A |
| 'Tax advisor' | tax preparation | baseline |
| 'Secure tax advisor' | tax preparation | elevated |

The examples above and others like them may be used in combination. For instance, a biometric recorder may include both a fingerprint recorder and a voice recorder, and both may contribute to the biometric data. The fingerprint recorder may provide the user biometric, while the voice recorder provides the access mode selection, for example.

Example system 102 includes a feedback component 106 configured to generate human-detectable feedback. The capacity to generate human-detectable feedback provides the technical benefit of making the user instantly aware of the unlocked access mode, which reduces the likelihood that the user will attempt inappropriate or unavailing access to the trained AI. The detailed nature of the feedback is not particularly limited; it may include visual feedback, audio feedback, and/or haptic feedback. Generally speaking, the feedback is intended to inform the user of the particular mode of access to trained AI that is currently unlocked on system 102. For that reason, the feedback corresponding to a given access mode should be distinct from the feedback corresponding to the other available access modes.

In examples in which feedback component 106 provides visual feedback, the feedback may comprise a conspicuous graphical user-interface element (e.g., an icon) rendered on a feedback component. Thus, the feedback component may take the form of an image-forming electronic display 128 (e.g., a display screen or monitor). In other examples the feedback component may include a non-image-forming electronic display, such as a light-emitting diode (LED) array (*vide infra*)*.* In these and other examples, the feedback corresponds to the mode of access to trained AI that is currently unlocked on system 102.

In some examples, feedback component 106 comprises a loudspeaker 130, and the feedback comprises audio feedback-e.g., different tones corresponding each to a different access mode. In some examples, the feedback component comprises a haptic mechanism such as an electromechanical vibrational motor (not shown in the drawings), and the feedback comprises haptic feedback-e.g., different vibration patterns corresponding each to a different access mode.

Continuing in FIG. 1, cryptographic module 110 of system 102 comprises computer hardware and/or computer software. The cryptographic module is coupled operatively to control module 108 and coupled communicatively to an authentication database 132, which can be local or remote. The authentication database maintains and serves reference biometric data usable to authenticate user 112 as someone authorized to consume trained AI according to one or more access modes. The authentication database may store the reference biometric data in encrypted form. The cryptographic module may be configured to search the authentication database for biometric data matching, after decryption, the user biometric. By comparison of reference biometric data against the user biometric, the cryptographic module may determine which modes of access to trained AI (if any) are available to the user. Incorporation of a cryptographic module provides the technical benefit of improved security of system 102 against unauthorized access to privileged data.

Cryptographic module 110 may comprise a secure element (SE), hardware security module (HSM), or trusted-platform module (TPM). Accordingly, the cryptographic module may be configured to securely host cryptographic data and keys in accordance with a cryptographic algorithm. In more particular examples, the cryptographic module may include a cryptoprocessor that implements an ISO/IEC 11889 standard. In some implementations, cryptographic module 110 may provide additional functionality, as described hereinafter.

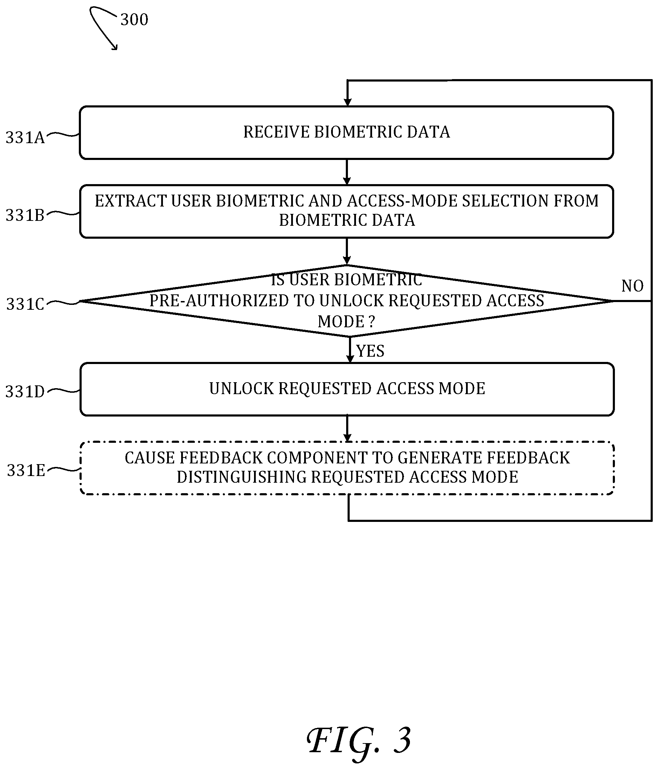

Control module 108 comprises computer hardware and/or computer software. The control module is configured to enact the decision making by which system 102 authenticates the user and, *inter alia,* determines which mode of access to trained AI is requested by the user. To that end, the control module may enact the method illustrated in FIG. 3.

FIG. 3 shows aspects of an example user-authentication and access-selection method 300. For ease of illustration, the method is described with continued reference to the configurations described above. It will be understood, however, that different configurations may also support the method.

At 331A of method 300, a control module of a user-authentication and access-selection system receives biometric data from a biometric recorder. The biometric data includes a user biometric and an access-mode selection that distinguishes a requested mode of access to trained AI from among a plurality of modes of access to trained AI.

At 331B, the control module extracts the user biometric and the requested access mode from the biometric data. In some examples, extraction comprises rotating a fingerprint image, facial image, or ocular image into a standard orientation. The user biometric is then based at least partly on the rotated image, and the access mode is based at least partly on the rotation angle necessary to rotate the image into the standard orientation. In some examples, extraction of the access mode comprises determining, via a heuristic, the finger or fingers associated with a recorded fingerprint, or the eye associated with a recorded ocular image. In some examples, extraction of the access mode comprises recognizing a passphrase pronounced by the user.

In some examples, the access-mode selection specifies a category of trained AI from among a plurality of categories of trained AI available from an AI service. Example categories include: AI trained on worldwide-web data, AI trained on company data, AI related to general knowledge, and AI related to specific knowledge domains, such as drug discovery, physics, mathematics, vehicle navigation, personal finance, tax preparation, or virtually any other knowledge domain. The capacity to specify a category of trained AI provides the technical benefit of simplifying the user's interaction with client agents configured to retrieve AI trained on specific knowledge domains.

In some examples, the access-mode selection specifies a user profile for access to the trained AI from among a plurality of user profiles associated with the user biometric. Example user profiles include but are not limited to a work profile, a personal profile, and a family profile. The capacity to specify a user profile provides the technical benefit of simplifying the process of user authentication in the scenario in which two or more user profiles may be used to consume trained AI on the same device.

In some examples, the access-mode selection specifies an access-security level for access to the trained AI from among a plurality of access-security levels associated with the specified category of trained AI. Example access-security levels include but are not limited to a baseline access-security level and an elevated access-security level. The capacity to specify an access-security level provides the technical benefit of simplifying, for the user, the process of restricting access to privileged data during consumption of trained AI.

In some examples, the access-mode selection specifies a device for accessing the trained AI from among a plurality of devices associated with a user profile also specified in the access-mode selection. Example devices include but are not limited to a desktop computer, a laptop computer, a tablet computer, a smartphone, a wearable computer, and a vehicle. The capacity to specify a device provides the technical benefit of simplifying, for the user, the process of adding device specificity to any of the foregoing access-mode selections.

At 331C, the control module determines, via a cryptographic module, whether the user biometric is pre-authorized to unlock the requested mode of access. To that end, the control module submits the user biometric to the cryptographic module, which, having access to an authentication database, decrypts in series each reference biometric associated with the user and compares each decrypted reference biometric to the user biometric.

At 331D, the control module unlocks the requested mode of access if it is determined that the user biometric is pre-authorized to unlock the requested mode of access. In some examples, each reference biometric in the authentication database is associated with a list of access modes that the reference biometric is able to unlock. If the requested access mode appears on the list, then that access mode is unlocked.

At 331E, the control module optionally causes the feedback component to generate feedback distinguishing the requested mode of access when the requested mode of access is unlocked. The requested mode of access may be distinguished from other modes of access, or from no mode of access, as appropriate.

As noted above, method 300 may be enacted on a variety of computer systems, such as user-authentication and access-selection system 102 of FIG. 1. As any such system can be integrated into a smartphone, tablet computer, laptop computer, desktop computer, wearable computer system, or vehicle, the computer system used to enact method 300 may be the same computer system on which the trained AI is unlocked (at 331D) and thereafter consumed. To that end, system 102 of FIG. 1 may further include a network interface 134. Via the network interface, a client agent 135 executing on the system may access one or more web services serving trained AI. In some examples, the network interface may comprise an Ethernet connection. In some examples, the network interface may comprise a WiFi connection. Integration of the user-authentication and access-selection system into the device on which the client agent is operating provides the technical benefit of operational efficiency.

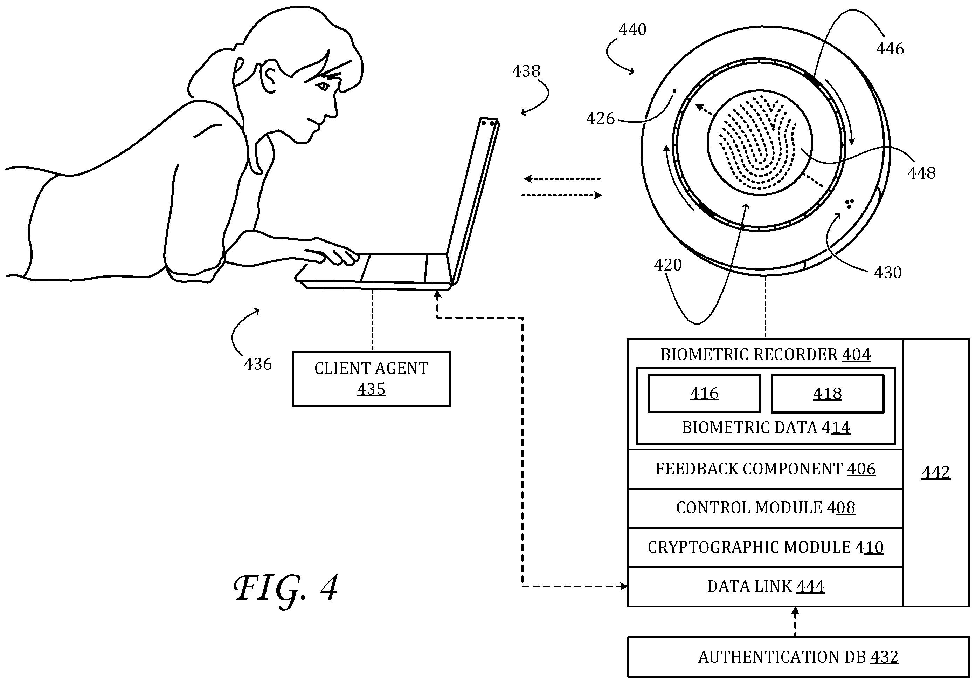

In other examples, the computer system used to convey the trained AI to the user may be distinct from the user-authentication and access-selection system used to enact method 300. For instance, the user-authentication and access-selection system may be integrated into a portable device communicatively coupled to a smartphone, tablet computer, laptop computer, desktop computer, wearable computer system, or vehicle. FIG. 4 shows aspects of an environment 436 including an AI-receiving computer system 438 and an example portable user-authentication and access-selection device 440. Client agent 435 executes on system 438.

Example portable device 440 comprises a biometric recorder 404, a feedback component 406 configured to generate human-detectable feedback, a control module 408 and cryptographic module 410 configured as described above. The device 440 may be powered by battery 442. Integration of the user-authentication and access-selection system into a portable device that can interact with the system on which the client agent is operating provides the technical benefit of operational extensibility: the same portable device can be used for user authentication and access-mode selection on different computer systems. In addition, the AI-receiving computer system need not have the specialized biometric componentry of the user-authentication and access-selection device in environments in which the portable device is used.

Example portable device 440 also includes a data link 444 configured to exchange data with AI-receiving computer system 438. In this example, control module 408 is configured to unlock the requested mode of access on the AI-receiving computer system via the data link if it is determined that the user biometric is pre-authorized to unlock the requested mode of access on the AI-receiving computer system. Typically the act of unlocking an access mode, remotely, on the AI-receiving computer system requires secure access to the AI-receiving computer system. Cryptographic module 410 may be tasked with negotiating the secure access in addition to the secure user-authentication tasks described above.

Data link 444 may be a wired or wireless data link. In some examples, the data link comprises a wireless interface, and the access-mode selection specifies an AI-receiving computer system for accessing the trained AI from among a plurality of AI-receiving computer systems capable of accessing the trained AI and associated with the user biometric. In some examples, the data link comprises a Bluetooth transmitter and receiver, or a WiFi or Wi-R (body-area network) transmitter and receiver. In some examples, the data link may be a near-field communication (NFC) or ultra-wideband (UWB) data link. In some examples, the data link may comprise a wired data interface such as a USB or micro-USB interface. In wired and wireless variants, the data link may be selected to support SE, HSM, or TPM encrypted communication, or similar.

In some examples, feedback component 406 includes a physical loudspeaker 430 for emitting a tone indicative of the unlocked access mode. In other examples, the feedback component may operate through data link 444 to conjure a corresponding tone on AI-receiving computer system 438.

In the example portable device 440 of FIG. 4, biometric recorder 404 comprises a fingerprint recorder 420, and feedback component 406 comprises a ring of LED lamps 446. Here the feedback may comprise illumination of one or more of the lamps according to a pre-determined pattern (spatial and/or temporal), which corresponds to the mode of access to trained AI that is unlocked on system 438. In a more particular example, each lamp may comprise two or more LEDs emitting in different wavelength bands and arranged for color mixing. This configuration enables control module 408 to present a large number of static patterns and a virtually unlimited number of moving patterns associated each to a corresponding access mode. Example portable device 440 has a thin and compact form factor that enables it to be carried in a pocket or wallet. In the illustrated example, the device is round; by rotating the device in the hand, the user can control the orientation of any fingerprint relative to transparent window 448 and thereby signal a requested access mode. A biometric data 414 is received from the biometric recorder, the biometric data includes a user biometric 416 and an access-mode selection 418 that distinguishes a requested mode of access to trained artificial intelligence 'AI' from among a plurality of modes of access to trained AI.

No aspect of the drawings or description should be interpreted in a limiting sense, because numerous variations, additions, and omissions are also envisaged. For instance, when embodied in a portable device, as shown in FIG. 4, a user-authentication and access-selection system may be used as a convenient token for multi-factor authentication (MFA) of the user on nearby computer systems. Such MFA may be used for secure access even to services distinct from trained-AI consumption, but may rely on biometric recording and processing of biometric data as described above. More particularly, a user-authentication and access-selection device may communicate with another computer system via NFC, Bluetooth and/or UWB, to support the MFA-e.g., in lieu of a smartphone. A user-authentication and access-selection device may communicate with building door or vehicle security locks via NFC and / or UWB to enable building or vehicle access.

As noted above, the methods herein may be tied to a computer system of one or more computing devices. Such methods and processes may be implemented as an application program or service, an application programming interface (API), a library, and/or other computer-program product. Example computer systems include user-authentication and access-control system 102 and AI-receiving computer system 436.

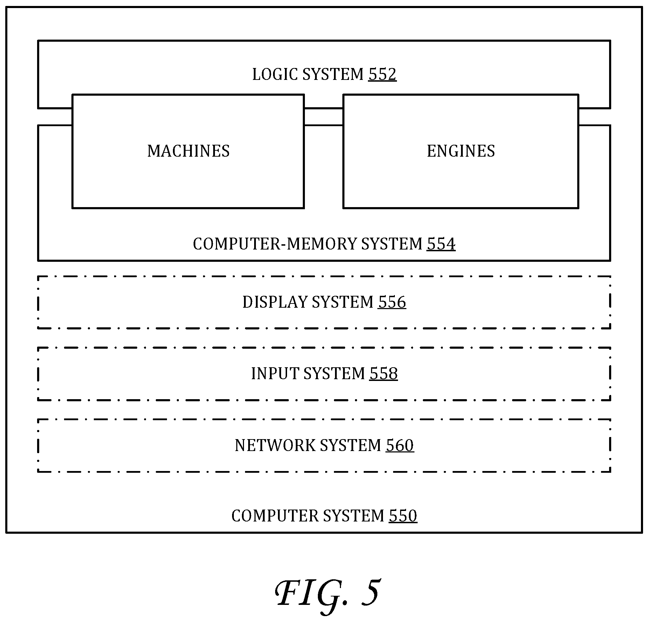

FIG. 5 provides a schematic representation of a computer system 550 configured to provide some or all of the computer system functionality disclosed herein. Computer system 550 may take the form of a personal computer, application-server computer, or any other computing device.

Computer system 550 includes a logic system 552 and a computer-memory system 554. Computer system 550 may optionally include a display system 556, an input system 558, a network system 790, and/or other systems not shown in the drawings.

Logic system 552 includes one or more physical devices configured to execute instructions. For example, the logic system may be configured to execute instructions that are part of at least one operating system (OS), application, service, and/or other program construct. The logic system may include at least one hardware processor (e.g., microprocessor, central processor, central processing unit (CPU) graphics processing unit (GPU), and/or neural processing unit (NRU)) configured to execute software instructions. An NPU is a specialized processor configured to accelerate AI and machine learning tasks. Unlike general-purpose CPUs or GPUs, NPUs are optimized for handling neural network computations, making them highly efficient for tasks like speech recognition, image processing, and deep learning. An NPU may be integrated into a PC, smartphone, or cloud-computing server, in order to enhance AI applications. Additionally or alternatively, the logic system may include at least one hardware or firmware device configured to execute hardware or firmware instructions. A processor of the logic system may be single-core or multi-core, and the instructions executed thereon may be configured for sequential, parallel, and/or distributed processing. Individual components of the logic system optionally may be distributed among two or more separate devices, which may be remotely located and/or configured for coordinated processing. Aspects of the logic system may be virtualized and executed by remotely-accessible, networked computing devices configured in a cloud-computing configuration.

Computer-memory system 554 includes at least one physical device configured to temporarily and/or permanently hold computer system information, such as data and instructions executable by logic system 552. When the computer-memory system includes two or more devices, the devices may be collocated or remotely located. Computer-memory system 554 may include at least one volatile, nonvolatile, dynamic, static, read/write, read-only, random-access, sequential-access, location-read addressable, file-read addressable, and/or content-read addressable computer-memory device. Computer-memory system 554 may include at least one removable and/or built-in computer-memory device. When the logic system executes instructions, the state of computer-memory system 554 may be transformed-e.g., to hold different data.

Aspects of logic system 552 and computer-memory system 554 may be integrated together into one or more hardware-logic components. Any such hardware-logic component may include at least one program- or application-specific integrated circuit (PASIC / ASIC), program- or application-specific standard product (PSSP / ASSP), system-on-a-chip (SOC), or complex programmable logic device (CPLD), for example.

Logic system 552 and computer-memory system 554 may cooperate to instantiate one or more logic machines or engines. As used herein, the terms 'machine' and 'engine' each refer collectively to a combination of cooperating hardware, firmware, software, instructions, and/or any other components that provide computer system functionality. In other words, machines and engines are never abstract ideas and always have a tangible form. A machine or engine may be instantiated by a single computing device, or a machine or engine may include two or more subcomponents instantiated by two or more different computing devices. In some implementations, a machine or engine includes a local component (e.g., a software application executed by a computer system processor) cooperating with a remote component (e.g., a cloud computing service provided by a network of one or more server computer systems). The software and/or other instructions that give a particular machine or engine its functionality may optionally be saved as one or more unexecuted modules on one or more computer-memory devices.

Machines and engines (as used throughout the above description) may be implemented using any suitable combination of machine learning (ML) and artificial intelligence (AI) techniques. Non-limiting examples of techniques that may be incorporated in an implementation of one or more machines include support vector machines, multi-layer neural networks, convolutional neural networks (e.g., spatial convolutional networks for processing images and/or video, and/or any other suitable convolutional neural network configured to convolve and pool features across one or more temporal and/or spatial dimensions), recurrent neural networks (e.g., long short-term memory networks), associative memories (e.g., lookup tables, hash tables, bloom filters, neural Turing machines and/or neural random-access memory) unsupervised spatial and/or clustering methods (e.g., nearest neighbor algorithms, topological data analysis, and/or k-means clustering), and/or graphical models (e.g., (hidden) Markov models, Markov random fields, (hidden) conditional random fields, and/or AI knowledge bases)).

When included, display system 556 may be used to present a visual representation of data held by computer-memory system 554. The visual representation may take the form of a graphical user interface (GUI) in some examples. The display system may include one or more display devices utilizing virtually any type of technology. In some implementations, display system may include one or more virtual-, augmented-, or mixed reality displays.

When included, input system 558 may comprise or interface with one or more input devices. An input device may include a sensor device or a user input device. Examples of user input devices include a keyboard, mouse, or touch screen.

When included, network system 790 may be configured to communicatively couple computer system 550 with one or more other computer systems. The network system may include wired and/or wireless communication devices compatible with one or more different communication protocols. The network system may be configured for communication via personal-, local- and/or wide-area networks.

In conclusion, one aspect of this disclosure is directed to a user-authentication and access-selection system. The system comprises a biometric recorder, a cryptographic module, and a control module. The control module is configured to: (a) receive biometric data from the biometric recorder, the biometric data including a user biometric and an access-mode selection that distinguishes a requested mode of access to trained artificial intelligence (AI) from among a plurality of modes of access to trained AI; (b) determine, via the cryptographic module, whether the user biometric is pre-authorized to unlock the requested mode of access; and (c) unlock the requested mode of access if it is determined that the user biometric is pre-authorized to unlock the requested mode of access.

In some implementations the biometric recorder comprises a fingerprint recorder, and the biometric data comprises a fingerprint. In some implementations the biometric recorder comprises a camera, and the biometric data comprises a facial image. In some implementations the biometric recorder comprises a camera, and the biometric data comprises an ocular image. In some implementations the biometric recorder comprises a voice recorder, and the biometric data comprises vocalization data. In some implementations the cryptographic module is configured to receive and decrypt reference biometric data from an authentication database for comparison against the user biometric. In some implementations the system further comprises a feedback component configured to generate human-detectable feedback distinguishing the requested mode of access when the requested mode of access is unlocked. In some implementations the feedback component comprises a haptic feedback mechanism. In some implementations the system is integrated into a smartphone or computer. In some implementations the system is integrated into a portable device communicatively coupled to a smartphone or computer.

Another aspect of this disclosure is directed to a user-authentication and access-selection method. The method comprises: (a) receiving biometric data from a biometric recorder, the biometric data including a user biometric and an access-mode selection that distinguishes a requested mode of access to trained artificial intelligence (AI) from among a plurality of modes of access to trained AI; (b) determining, via a cryptographic module, whether the user biometric is pre-authorized to unlock the requested mode of access; and (c) unlocking the requested mode of access if it is determined that the user biometric is pre-authorized to unlock the requested mode of access.

In some implementations the method further comprises causing a feedback component to generate feedback distinguishing the requested mode of access when the requested mode of access is unlocked. In some implementations the access-mode selection specifies a category of trained AI from among a plurality of categories of trained AI available from an AI service. In some implementations the access-mode selection specifies a user profile for access to the trained AI from among a plurality of user profiles associated with the user biometric. In some implementations the access-mode selection specifies an access-security level for access to the trained AI from among a plurality of access-security levels associated with the specified category of trained AI. In some implementations the access-mode selection specifies a device for accessing the trained AI from among a plurality of devices associated with a user profile also specified in the access-mode selection.

Another aspect of this disclosure is directed to a user-authentication and access-selection device. The device comprises a biometric recorder; a feedback component configured to generate human-detectable feedback; a cryptographic module; a data link configured to exchange data with an AI-receiving computer system; and a control module. The control module is configured to: (a) receive biometric data from the biometric recorder, the biometric data including a user biometric and an access-mode selection that distinguishes a requested mode of access to trained artificial intelligence (AI) from among a plurality of modes of access to trained AI; (b) determine, via the cryptographic module, whether the user biometric is pre-authorized to unlock the requested mode of access; (c) unlock the requested mode of access on the AI-receiving computer system via the data link if it is determined that the user biometric is pre-authorized to unlock the requested mode of access on the AI-receiving computer system; and (d) cause the feedback component to generate feedback distinguishing the requested mode of access when the requested mode of access is unlocked.

In some implementations the biometric recorder comprises a fingerprint recorder, and the biometric data comprises a fingerprint. In some implementations the data link comprises a Bluetooth transmitter and receiver, a Wi-Fi transmitter and receiver, or a wired data interface. In some implementations the data link comprises a wireless interface, and the access-mode selection specifies an AI-receiving computer system for accessing the trained AI from among a plurality of AI-receiving computer systems capable of accessing the trained AI and associated with the user biometric.

This disclosure is presented by way of example and with reference to the attached drawing figures. Components, process steps, and other elements that may be substantially the same in one or more of the figures are identified coordinately and described with minimal repetition. It will be noted, however, that elements identified coordinately may also differ to some degree. It will be further noted that the figures are schematic and generally not drawn to scale. Rather, the various drawing scales, aspect ratios, and numbers of components shown in the figures may be purposely distorted to make certain features or relationships easier to see.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed. The phrase 'based at least partly on' is intended to remind the reader that the functional and/or conditional logic illustrated herein neither requires nor excludes suitable additional logic, executing in combination with the illustrated logic, to provide additional benefits.

The subject matter of the present disclosure includes all novel and non-obvious combinations and sub-combinations of the various processes, systems and configurations, and other features, functions, acts, and/or properties disclosed herein, as well as any and all equivalents thereof.

Alternatively or in addition to the other examples described herein, examples include any combination of the following:
Example Clause 1. A user-authentication and access-selection system, comprising: a biometric recorder; a cryptographic module; and a control module configured to: receive biometric data from the biometric recorder, the biometric data including a user biometric and an access-mode selection that distinguishes a requested mode of access to trained artificial intelligence (AI) from among a plurality of modes of access to trained AI; determine, via the cryptographic module, whether the user biometric is pre-authorized to unlock the requested mode of access; and unlock the requested mode of access if it is determined that the user biometric is pre-authorized to unlock the requested mode of access.
Example Clause 2. The system of example clause 1, wherein the biometric recorder comprises a fingerprint recorder, and the biometric data comprises a fingerprint.
Example Clause 3. The system of example clause 1 or 2, wherein the biometric recorder comprises a camera, and the biometric data comprises a facial image.
Example Clause 4. The system of example clause 1 or 2, wherein the biometric recorder comprises a camera, and the biometric data comprises an ocular image.
Example Clause 5. The system of any of example clauses 1 to 4, wherein the biometric recorder comprises a voice recorder, and the biometric data comprises vocalization data.
Example Clause 6. The system of any of example clauses 1 to 5, wherein the cryptographic module is configured to receive and decrypt reference biometric data from an authentication database for comparison against the user biometric.
Example Clause 7. The system of any of example clauses 1 to 6, further comprising a feedback component configured to generate human-detectable feedback distinguishing the requested mode of access when the requested mode of access is unlocked.
Example Clause 8. The system of example clause 7, wherein the feedback component comprises a haptic feedback mechanism.
Example Clause 9. The system of any of example clauses 1 to 8, wherein the system is integrated into a smartphone or computer.
Example Clause 10. The system of any of example clauses 1 to 8, wherein the system is integrated into a portable device communicatively coupled to a smartphone or computer.
Example Clause 11. A user-authentication and access-selection method, comprising: receiving biometric data from a biometric recorder, the biometric data including a user biometric and an access-mode selection that distinguishes a requested mode of access to trained artificial intelligence (AI) from among a plurality of modes of access to trained AI; determining, via a cryptographic module, whether the user biometric is pre-authorized to unlock the requested mode of access; and unlocking the requested mode of access if it is determined that the user biometric is pre-authorized to unlock the requested mode of access.
Example Clause 12. The method of example clause 11, further comprising causing a feedback component to generate feedback distinguishing the requested mode of access when the requested mode of access is unlocked.
Example Clause 13. The method of example clause 11 or 12, wherein the access-mode selection specifies a category of trained AI from among a plurality of categories of trained AI available from an AI service.
Example Clause 14. The method of any of example clauses 11 to 13, wherein the access-mode selection specifies a user profile for access to the trained AI from among a plurality of user profiles associated with the user biometric.
Example Clause 15. The method of any of example clauses 11 to 14, wherein the access-mode selection specifies an access-security level for access to the trained AI from among a plurality of access-security levels associated with the specified category of trained AI.
Example Clause 16. The method of any of example clauses 11 to 15, wherein the access-mode selection specifies a device for accessing the trained AI from among a plurality of devices associated with a user profile also specified in the access-mode selection.
Example Clause 17. A user-authentication and access-selection device, comprising: a biometric recorder; a feedback component configured to generate human-detectable feedback; a cryptographic module; a data link configured to exchange data with an AI-receiving computer system; and a control module configured to: receive biometric data from the biometric recorder, the biometric data including a user biometric and an access-mode selection that distinguishes a requested mode of access to trained artificial intelligence (AI) from among a plurality of modes of access to trained AI; determine, via the cryptographic module, whether the user biometric is pre-authorized to unlock the requested mode of access; unlock the requested mode of access on the AI-receiving computer system via the data link if it is determined that the user biometric is pre-authorized to unlock the requested mode of access on the AI-receiving computer system; and cause the feedback component to generate feedback distinguishing the requested mode of access when the requested mode of access is unlocked.
Example Clause 18. The device of example clause 17, wherein the biometric recorder comprises a fingerprint recorder, and the biometric data comprises a fingerprint.
Example Clause 19. The device of example clause 17 or 18, wherein the data link comprises a Bluetooth transmitter and receiver, a Wi-Fi transmitter and receiver, or a wired data interface.
Example Clause 20. The device of any of example clauses 17 to 19, wherein the data link comprises a wireless interface, and the access-mode selection specifies an AI-receiving computer system for accessing the trained AI from among a plurality of AI-receiving computer systems capable of accessing the trained AI and associated with the user biometric.

## Claims

1. A user-authentication and access-selection system (102), comprising:
a biometric recorder (104);
a cryptographic module (110); and
a control module (108) configured to:
receive (331A) biometric data from the biometric recorder, the biometric data including a user biometric (116) and an access-mode selection (118) that distinguishes a requested mode of access to trained artificial intelligence 'AI' from among a plurality of modes of access to trained AI;
determine (331C), via the cryptographic module, whether the user biometric is pre-authorized to unlock the requested mode of access; and
unlock (331D) the requested mode of access if it is determined that the user biometric is pre-authorized to unlock the requested mode of access.

2. The system of claim 1, wherein the biometric recorder comprises a fingerprint recorder, and the biometric data comprises a fingerprint.

3. The system of claim 1 or claim 2, wherein the biometric recorder comprises a camera, and the biometric data comprises a facial image.

4. The system of claim 1 or claim 2, wherein the biometric recorder comprises a camera, and the biometric data comprises an ocular image.

5. The system of any of claims 1 to 4, wherein the biometric recorder comprises a voice recorder, and the biometric data comprises vocalization data.

6. The system of any of claims 1 to 5, wherein the cryptographic module is configured to receive and decrypt reference biometric data from an authentication database for comparison against the user biometric.

7. The system of any of claims 1 to 6, further comprising a feedback component configured to generate human-detectable feedback distinguishing the requested mode of access when the requested mode of access is unlocked.

8. The system of claim 7, wherein the feedback component comprises a haptic feedback mechanism.

9. The system of any of claims 1 to 8, wherein the system is integrated into a smartphone or computer.

10. The system of any of claims 1 to 8, wherein the system is integrated into a portable device communicatively coupled to a smartphone or computer.

11. A user-authentication and access-selection method (300), comprising:
receiving (331A) biometric data from a biometric recorder, the biometric data including a user biometric and an access-mode selection that distinguishes a requested mode of access to trained artificial intelligence 'AI' from among a plurality of modes of access to trained AI;
determining (331C), via a cryptographic module, whether the user biometric is pre-authorized to unlock the requested mode of access; and
unlocking (331D) the requested mode of access if it is determined that the user biometric is pre-authorized to unlock the requested mode of access.

12. The method of claim 11, further comprising causing a feedback component to generate feedback distinguishing the requested mode of access when the requested mode of access is unlocked.

13. The method of claim 11 or claim 12, wherein the access-mode selection specifies at least one of:
a category of trained AI from among a plurality of categories of trained AI available from an AI service; a user profile for access to the trained AI from among a plurality of user profiles associated with the user biometric;
an access-security level for access to the trained AI from among a plurality of access-security levels associated with the specified category of trained AI;
a device for accessing the trained AI from among a plurality of devices associated with a user profile also specified in the access-mode selection; or
a combination thereof.

14. A user-authentication and access-selection device (440), comprising:
a biometric recorder (404);
a feedback component (406) configured to generate human-detectable feedback;
a cryptographic module (410);
a data link (444) configured to exchange data with an AI-receiving computer system (438); and
a control module (408) configured to:
receive (331A) biometric data (414) from the biometric recorder, the biometric data including a user biometric (416) and an access-mode selection (418) that distinguishes a requested mode of access to trained artificial intelligence 'AI' from among a plurality of modes of access to trained AI;
determine (331C), via the cryptographic module, whether the user biometric is pre-authorized to unlock the requested mode of access;
unlock (331D) the requested mode of access on the AI-receiving computer system via the data link if it is determined that the user biometric is pre-authorized to unlock the requested mode of access on the AI-receiving computer system; and
cause (331E) the feedback component to generate feedback distinguishing the requested mode of access when the requested mode of access is unlocked.

15. The device of claim14, wherein the data link comprises a wireless interface, and the access-mode selection specifies an AI-receiving computer system for accessing the trained AI from among a plurality of AI-receiving computer systems capable of accessing the trained AI and associated with the user biometric.
